# EUROPEAN PATENT SPECIFICATION

(11) **EP 3 827 332 B1**
(45) Date of publication and mention of the grant of the patent: **07.08.2024**
(21) Application number: 19839475.1
(22) Date of filing: 16.12.2019
(51) Int. Cl.: G06F 3/0481, H04M 1/72451, H04M 1/72457, G06F 3/0482, G06F 3/0484, G06F 3/04812, G06F 3/0488, G06F 9/451, H04N 21/47, H04N 21/482, H04N 21/488, H04N 21/431

(54) **DYNAMICALLY UPDATING USER INTERFACE ELEMENTS**
DYNAMISCHE AKTUALISIERUNG VON BENUTZERSCHNITTSTELLENELEMENTEN
MISE À JOUR DYNAMIQUE D'ÉLÉMENTS D'INTERFACE UTILISATEUR

(30) Priority: 08.02.2019 US 201916270741
(43) Date of publication of application: 02.06.2021
(73) Proprietor: Google LLC, Mountain View, CA 94043 (US)
(72) Inventor: BAR-YEHUDA, Ethan, 6789141 Tel Aviv (IL); COHEN, Tal, 6789141 Tel Aviv (IL); EREZ, Yonatan, 6789141 Tel Aviv (IL); URI, Gidon Ben, 6789141 Tel Aviv (IL); WEISS, Mira, 6789141 Tel Aviv (IL); SCARPA, Alice Duarte, 30260-070 Belo Horizonte (BR); SCHWARTZBERG, Yoav, 6789141 Tel Aviv (IL); MATIAS, Yossi, 6789141 Tel Aviv (IL); ZAIFMAN, Arkady, 6789141 Tel Aviv (IL)
(74) Representative: Worley, Alexander John
(86) International application number: PCT/US2019/066534
(87) International publication number: WO 2020/163016

(56) References cited:
- US-A1- 2009 248 996
- US-A1- 2012 260 215
- US-A1- 2013 007 665
- US-A1- 2015 058 770

## Description

### FIELD

The present disclosure relates generally to systems and method for implementing user interface elements for display on an electronic device. More particularly, floating user interface elements with dynamically updating state portions are provided in a manner that requires limited screen real estate.

### BACKGROUND

A multitude of various electronic devices are currently configured for providing access to digital content, media, and the like. For instance, Internet-connected computing devices such as smartphones, laptops, personal computers, and other mobile devices can include web browsers or other applications for providing real-time information about any number of people, things, places, events, etc. Smart home devices including televisions are able to electronically stream videos and other media content potentially associated with such real-time information. Technology continues to adapt the manner in which such information is electronically available to users.

US 2009/248996 A1 describes apparatus and methods for changing operational modes of a widget and changing content feed to a widget based on operational mode changes and/or memory availability on the wireless device.

### SUMMARY

Aspects and advantages of embodiments of the present disclosure will be set forth in part in the following description, or can be learned from the description, or can be learned through practice of the embodiments.

One example aspect of the present disclosure is directed to an electronic device including a display device, one or more processors, and at least one tangible, non-transitory computer-readable medium that stores instructions that, when executed by the one or more processors, cause the electronic device to perform operations. The operations include identifying a time-varying event occurring between a first time and a second time and in a
first location, the first location different than a second location of the electronic device. The operations include
receiving at a third time a request to display information about the time-varying event on the display device. The operations include determining if the third time is between the first time and the second time. In response to the request, and when the third time is determined to be between the first time and the second time, the operations also include initiating display of a floating user interface element on the display device. The floating user interface element displays information related to the time-varying event. The information related to the time-varying event comprises at least one current state associated with the time-varying event displayed in a current state portion of the floating user interface element. The floating user interface element is configured to remain visible on the display device across multiple different user interface screens associated with multiple different programs accessed by the electronic device based on a user selection in a search browser application. The one or more processors is configured to update the current state portion of the floating user interface element when the at least one current state changes relative to a previous state.

Another example aspect of the present disclosure is directed to a computer-implemented method for dynamically displaying a floating user interface element within graphical user interfaces configured for display on a display device associated with an electronic device. The computer-implemented method includes identifying, by one or more processors associated with the electronic device, a time-varying event occurring between a first time and a second time and in a first location, the first location different than a second location of the electronic device. The computer-implemented method includes receiving, by the one or more processors, at a third time a request to display information about the time-varying event on the display device. The computer-implemented method includes determining, by the one or more processors, if the third time is between the first time and the second time. The computer-implemented method includes in response to the request, when the third time is determined to be between the first time and the second time, initiating, by the one or more processors, display of a floating user interface element on the display device. The floating user interface element displays information related to the time-varying event, the information related to the time-varying event including at least one current state associated with the time-varying event displayed in a current state portion of the floating user interface element. The floating user interface element is configured to remain visible on the display device across multiple different user interface screens associated with multiple different programs accessed by the electronic device based on a user selection in a search browser application. The computer-implemented method includes updating, by the one or more processors, the current state portion of the floating user interface element when the at least one current state changes relative to a previous state.

Another example aspect of the present disclosure is directed to one or more tangible, non-transitory computer-readable media storing computer-readable instructions that when executed by one or more processors cause the one or more processors to perform operations. The operations include identifying a time-varying event occurring between a first time and a second time and in a first location, the first location different than a second location of the electronic device. The operations include receiving at a third time a request to display information about the time-varying event on the display device. The operations include determining if the third time is between the first time and the second time. The operations include in response to the request, when the third time is determined to be between the first time and the second time, initiating display of a floating user interface element on the display device. The floating user interface element displays information related to the time-varying event, the information related to the time-varying event comprising at least one current state associated with the time-varying event displayed in a current state portion of the floating user interface element. The floating user interface element is configured to remain visible on the display device across multiple different user interface screens associated with multiple different programs accessed by the electronic device based on a user selection in a search browser application. The operations include updating the current state portion of the floating user interface element when the at least one current state changes relative to a previous state.

Additional features are set out in the dependent claims.

By providing displaying a floating user interface element as set out in the aspects above, it is possible to provide a display feature that persists across different operational modes of the electronic device and/or is movable within the display. Accordingly, users can be advantageously provided consistent access to real-time or near real-time event and state information without detracting from their ability to continue using the electronic device for other purposes.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1 depicts a block diagram of an example computing system for implementing an event notification application, according to example embodiments of the present disclosure;
FIG. 2 depicts example movement of a floating user interface element from a first display location to a second display location, according to example embodiments of the present disclosure;
FIG. 3 depicts example enlarging of a floating user interface element from a first size to a second size, according to example embodiments of the present disclosure;
FIG. 4 depicts a first example configuration of a floating interface element, according to example embodiments of the present disclosure;
FIG. 5 depicts a second example configuration of a floating interface element, according to example embodiments of the present disclosure;
FIG. 6 depicts a third example configuration of a floating interface element, according to example embodiments of the present disclosure;
FIG. 7 depicts a fourth example configuration of a floating interface element, according to example embodiments of the present disclosure;
FIG. 8 depicts a fifth example configuration of a floating user interface element, according to example embodiments of the present disclosure;
FIG. 9 depicts a sixth configuration of a floating user interface element, according to example embodiments of the present disclosure;
FIG. 10 depicts a first visual representation of example aspects of an event notification application, according to example embodiments of the present disclosure;
FIG. 11 depicts a second visual representation of example aspects of an event notification application, according to example embodiments of the present disclosure;
FIG. 12 depicts a third visual representation of example aspects of an event notification application, according to example embodiments of the present disclosure;
FIG. 13 depicts a fourth visual representation of example aspects of an event notification application, according to example embodiments of the present disclosure;
FIG. 14 depicts a fifth visual representation of example aspects of an event notification application, according to example embodiments of the present disclosure;
FIG. 15 depicts a sixth visual representation of example aspects of an event notification application, according to example embodiments of the present disclosure;
FIG. 16 depicts a block diagram of an example method, according to example embodiments of the present disclosure; and
FIG. 17 depicts a block diagram of an example computing system, according to example embodiments of the present disclosure.

Reference numerals that are repeated across plural figures are intended to identify the same features in various implementations.

### DETAILED DESCRIPTION

Systems and methods consistent with the present disclosure include features for implementing dynamically updating user interface elements for display on an electronic device in a manner that requires limited screen real estate. More specifically, floating user interface elements are provided that include one or more state portions respectively indicative of a current state associated with a time-varying event. The state portions are updated when the current state changes relative to a previous state. In some implementations, the user is enabled to "pin" the dynamically updating user interface element to a display of the electronic device so that display of the user interface element persists across different operational modes of the electronic device and/or despite user activity or input directed to an alternative application, element, or feature concurrently presented on the display of the electronic device. In addition, in some implementations, the user interface element can be movable, expandable to receive additional information, collapsible to receive more concise information, and/or interactive in other ways. Thus, in addition or alternatively to pinning the user interface element, the user can re-size and move the user interface element to best allocate display space to various competing display features. By providing a display feature that persists across different operational modes of the electronic device and/or is movable within the display, users can be advantageously provided consistent access to real-time or near real-time event and state information without detracting from their ability to continue using the electronic device for other purposes.

According to an aspect of the present disclosure, a time-varying event associated with the disclosed floating user interface elements can correspond to a real-time event occurring at one or more tangible geographic locations other than a current location of the electronic device and that has an observable status and/or outcome that can vary over time. Non-limiting examples of time-varying events for which floating user interface elements can be implemented include sporting events, elections, stock market activity, travel-related activity, and others. In some implementations, the time-varying event can be a real-time competitive event between one or more competing parties (e.g. individuals, teams, and the like). As such, in the example of a sporting event, the one or more competing parties could correspond to one or more teams competing against one another in the real-time event (e.g., first and second opposing soccer teams, first and second opposing tennis players, a plurality of race car drivers, etc.) In the example of an election, the one or more competing parties could correspond to one or more candidates for an elected position (e.g., a candidate representing a first political party, a candidate representing a second political party, a candidate representing a third political party, etc.).

According to another aspect of the present disclosure, one or more state portions are used to describe aspects of the observable status and/or outcome of a time-varying event. Example state portions indicative of a current state of such time-varying events can include current scores, stock and/or commodity prices, election results, currency exchange rates, flight status indications (delayed, boarding, etc.), weather information, estimated time of arrival (ETA) for travel, and others. For instance, in the particular example of a sporting event, multiple state portions can be included in a floating user interface element to describe a real-time or near real-time score associated with each competing party engaged in the sporting event as well as additional optional state portions indicative of further observable aspects such as but not limited to elapsed event time, remaining event time, location conditions, and status of one or more competing parties or actions undertaken by the competing parties. In the particular example of an election, multiple state portions can be included in a floating user interface element to describe a real-time or near real-time posting of a number of total votes (e.g., popular votes, electoral votes, etc.) for each competing party in the election.

According to another aspect of the present disclosure, each time-varying event is identified as occurring between a first time and a second time. In some implementations, the first time can correspond to a start time of the time-varying event (e.g., the kickoff time of a soccer game). In some implementations, the first time can be associated with the start time of the time-varying event, but can additionally include a window of buffer time (e.g., one hour before the event begins). In some implementations, the second time can correspond to an end time of the time-varying event. In some implementations, the second time can start as or depend on an estimated end time. However, the estimated end time can be monitored and tracked to keep up with an actual end time. In this manner, if an estimated end time is extended due to weather, longer game play, or other circumstances, the second time can be dynamically updated. In some implementations, the second time can be associated with an end time, but can additionally include a window of buffer time (e.g., one hour after the event ends).

In some implementations, according to another aspect of the disclosed technology, the first and second times associated with a time-varying event are used to help determine when to initiate display of floating user interface elements. For example, a request to display information about the time-varying event can be received at a third time. A determination can be made regarding whether the third time is between the first time and the second time. When the third time is between the first time and the second time, display of a floating user interface element including information about the time-varying event can be initiated in response to the request.

When the third time is not between the first time and the second time, no action can be taken or a different action can be initiated. For example, display of a message can be initiated on the display device. A message displayed in response to the third time not being between the first time and the second time can include a message notifying a user of the electronic device that the time-varying event is not "live" or that an option for displaying information about the time-varying event is not currently available. In some implementations, if the third time is after the second time, the message can include a static message displaying information about the time-varying event. For instance, the static message can include final results associated with a time-varying event. However, those final results will not be dynamically updated because real-time updates are no longer available and/or applicable. In some implementations, if the third time is before the first time, a subscription to the time-varying event can be initiated in response to the request. As such, a user can be signed up to receive information about the time-varying event via the disclosed floating user interface elements when the first time arrives.

According to aspects of the present disclosure, an electronic device including one or more processors and a display device can implement aspects of the disclosed technology including an event notification system. In general, the event notification system can be configured to receive instructions indicative of a request for information associated with a time-varying event. The event notification system can then initiate display on the display device of a floating user interface element. The floating user interface element can include one or more state portions respectively indicative of a current state associated with the time-varying event. The state portions indicative of the current state associated with the time-varying event can be updated when the current state changes relative to a previous state.

According to another aspect of the present disclosure, each floating user interface element can be configured for display in a manner whereby it floats on top of anything else displayed. For instance, a floating user interface element can remain visible on the display device across multiple different user interface screens associated with multiple different programs, applications, control menus, windows, and/or the like accessed by the electronic device. Alternatively, a user can define certain other elements which supersede the floating user interface element and/or certain other elements which do not supersede the floating user interface element.

In one example, when the electronic device is a computing device (e.g., a smartphone, laptop, personal computer, mobile device, etc.), the floating user interface element can be configured to remain visible on the display device across multiple different software applications running on the computing device. For instance, the floating user interface element can persist in a designated location on the display device even while a user operates the computing device such that it switches from a first user interface screen associated with a home screen to a second user interface screen associated with a first application (e.g., a chat application) to a third user interface screen associated with a second application (e.g., a navigation application), or others.

In another example, when the electronic device is a television, the floating user interface element can be configured to remain visible on the display device across multiple different channels accessed for viewing on the television. For instance, the floating user interface element can persist in a designated location on the display device even while a user operates the television such that it switches from a first user interface screen associated with a first channel (e.g., a television guide screen) to a second user interface screen associated with a second channel (e.g., a first program channel such as a local news station) to a third user interface screen associated with a third channel (e.g., a second program channel such as a sports station).

In accordance with another example of the present disclosure, the disclosed floating user interface elements can be selectively moveable across a display device. This can be particularly useful when a user of an electronic device prefers for the floating user interface element to be in a user-customizable location or in a different location depending on which program is currently being operated or otherwise viewed on the display device. More particularly, in some implementations, an event notification application or other component of an electronic device can be configured to receiving movement instructions indicative of a request to move the floating user interface element from a first display location to a second display location on the display device. When the display device includes a touch-screen display device, the movement instructions can be received, for example, in response to a touch gesture received on the touch-screen display device of the floating user interface element at the first display location and a drag gesture received on the touch-screen display device to the second display location. In response to receiving the movement instructions, the floating user interface element can then be moved from the first display location to the second display location on the display device.

According to another example of the present disclosure, the disclosed floating user interface elements can be initially configured to occupy a limited portion of overall screen real estate available on a display device. However, the floating user interface elements can be selectable or otherwise adapted to expand from an initial first display size to a larger second display size. In some implementation, the larger second display size of a floating user interface element can accommodate display of the same information as contained in the first display size of floating user interface element, but with an enlarged font. In some implementations, the larger second display size of a floating user interface element can accommodate display of additional information associated with the time-varying event that was not contained in the first display size of floating user interface element.

According to another example of the present disclosure, the electronic device can be configured to activate an attention grabbing behavior associated with the electronic device when the current state of a variable associated with the time-varying event changes relative to a previous state. For example, if a state portion corresponds to a score of a sports game, and the score changes, then this change can be configured to not only update the state data provided within the floating user interface element, but also generate a device output (e.g., an audio sound output, a light or animated video output, a haptic feedback output such as a vibration of the electronic device, etc.) As examples, the light or animated video output can include flashing light, change in color(s), change in size of the element, change in location of the element, and/or various other effects that serve to draw the user's visual interest to the user interface element. These effects (e.g., light or animated video output) can be temporary and can revert to the standard state after a certain period of time.

According to another example of the present disclosure, it should be appreciated that floating user interface elements can be configured and coordinated for display in accordance with multiple time-varying events. Support for multiple time-varying events can be provided in a variety of different manners. For instance, in one example implementation, a single floating user interface element can include information about multiple time-varying events by including one or more state portions respectively indicative of a current state associated with each of a plurality of the multiple time-varying events. In another example implementation, multiple floating user interface elements can be provided for display on the display device. Each of the multiple floating user interface elements can respectively include one or more state portions respectively indicative of a current state associated with a corresponding time-varying event.

According to another example of the present disclosure, the initiation of display of one or more floating user interface elements as described herein can happen in response to a variety of manual actions and/or automated determinations. For instance, the display can be initiated in response to receipt of instructions indicative of a request for information associated with the time-varying event. In some implementations, these instructions can be user-initiated instructions received via the electronic device. For example, the user-initiated instructions can be received via an application (e.g., a search or browser application) that provides selectable buttons for identifying which time-varying events are of interest to a user of the electronic device. Sometimes the selectable buttons can be provided per event, while other times the selectable buttons can be provided per category of event such that every time-varying event falling within a given category (e.g., all sports games played by a particular sports team) will be selectable on a subscription-like basis. In some implementations, an event determination system can be configured to automatically determine (e.g., via one or more machine-learned models) time-varying events of potential interest to a user of the electronic device by considering user profile data, user activity history, etc. when a user selects to make such data available to the event determination system.

According to another example of the present disclosure, in some implementations, a split-screen mode can be made available as an alternative user interface option for use with floating user interface elements as described herein. For instance, a display device can be configured to define first and second portions that are distinct and non-overlapping. The floating user interface element(s) can be configured to remain visible on the display device within a first portion of the display device. The second portion of the display device can be configured to display multiple different user interface screens associated with multiple different programs accessed by the electronic device. By fixing at least one dimension associated with the first portion of the display device (e.g., a height dimension), then the floating user interface element can always occupy a limited screen height. Other applications can be configured to detect initiated display of the floating user interface element(s) within the first portion and use only the second portion of the display device for their user interfaces, thus ensuring that the floating user interface elements never hide any information associated with other currently active applications or channels on the electronic device.

The systems and methods described herein may provide a number of technical effects and benefits. For instance, provision of floating user interface elements in accordance with the disclosed technology can advantageously provide a user to have consistent access to a subset of important state information associated with time-varying events (e.g., sports scores, stock tickers, etc.) without going back and forth between applications and/or channels on an electronic device to do so. Each of these "switching" events can consume device resources (e.g., to load, initialize, and run different applications). Thus, aspects of the present disclosure conserve computing resources by reducing user activity that includes periodically switching between applications and/or channels to obtain updated event information. The disclosed technology provides an ability to show the most important data associated with such events while still using an electronic device for other things. Floating user interface elements and related features can thus enhance the overall useful functionality of electronic devices by affording updated access to current state data in a coordinated and easily accessible manner. In addition, such coordinated integration of display data across multiple programs can further increase safety of device operation, for example, when a device is used for task-specific applications such as navigation or the like.

With reference now to the Figures, example embodiments of the present disclosure will be discussed in further detail.

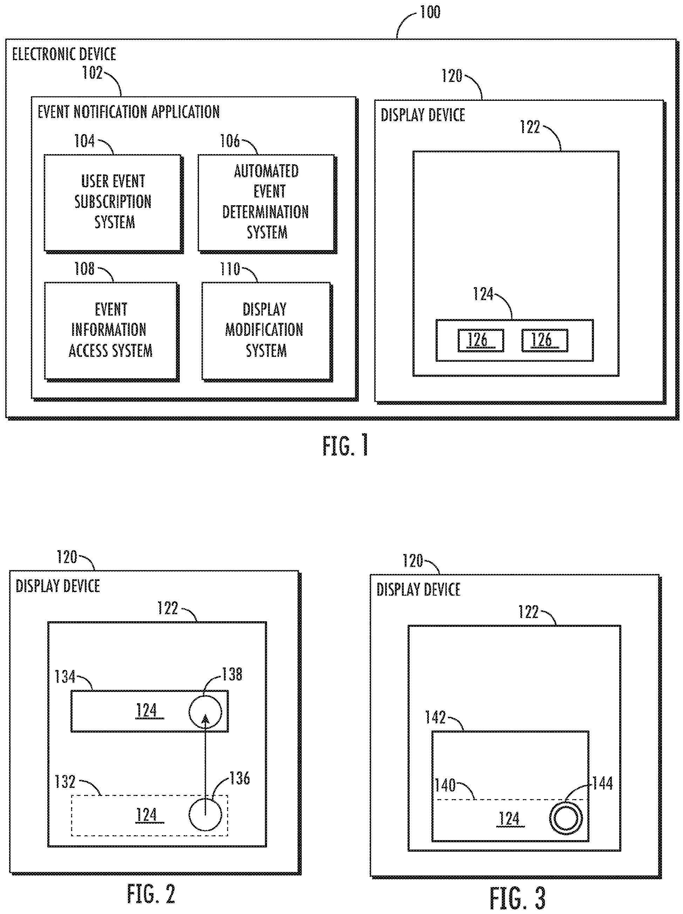

FIG. 1 depicts a block diagram of an example electronic device 100 for implementing floating user interface elements according to example embodiments of the present disclosure. In general, the electronic device 100 can include an event notification application 102 and a display device 120. The event notification application can include, for example, a user event subscription system 104, an automated event determination system 106, an event information access system 108, and a display modification system.

In some implementations, the event notification application 102 and various components thereof can include computer logic utilized to provide desired functionality. More particularly, the event notification application 102, including one or more of the user event subscription system 104, the automated event determination system 106, the event information access system 108, and the display modification system 110 can be implemented in hardware, firmware, and/or software controlling a general purpose processor. For example, in some implementations, the event notification application 102, including one or more of the user event subscription system 104, the automated event determination system 106, the event information access system 108, and the display modification system 110, can include program files stored on a storage device, loaded into a memory and executed by one or more processors. In other implementations, the event notification application 102, including one or more of the user event subscription system 104, the automated event determination system 106, the event information access system 108, and the display modification system 110, includes one or more sets of computer-executable instructions that are stored in a tangible computer-readable storage medium such as RAM hard disk or optical or magnetic media.

Referring more particularly to FIG. 1, event notification application 102 can include features for implementing dynamically updating user interface elements 124 for display on electronic device 100 in a manner that requires limited screen real estate. More specifically, floating user interface elements 124 are provided that include one or more state portions 126 respectively indicative of a current state associated with a time-varying event. The state portions 126 are updated when the current state changes relative to a previous state. Non-limiting examples of time-varying events for which floating user interface elements 124 can be implemented include sports games, elections, stock market activity, travel-related activity, and others. Example state portions 126 indicative of a current state of such time-varying events can include current scores, stock and/or commodity prices, election results, currency exchange rates, flight status indications (delayed, boarding, etc.), weather information, estimated time of arrival (ETA) for travel, and others.

A time-varying event associated with floating user interface element 124 can correspond to a real-time event occurring at one or more tangible geographic locations other than a current location of the electronic device 100 and that has an observable status and/or outcome that can vary over time. Non-limiting examples of time-varying events for which floating user interface element 124 can be implemented include sporting events, elections, stock market activity, travel-related activity, and others. In some implementations, the time-varying event can be a real-time competitive event between one or more competing parties (e.g. individuals, teams, and the like). As such, in the example of a sporting event, the one or more competing parties could correspond to one or more teams competing against one another in the real-time event (e.g., first and second opposing soccer teams, first and second opposing tennis players, a plurality of race car drivers, etc.) In the example of an election, the one or more competing parties could correspond to one or more candidates for an elected position (e.g., a candidate representing a first political party, a candidate representing a second political party, a candidate representing a third political party, etc.).

The one or more state portions 126 can be used to describe aspects of the observable status and/or outcome of a time-varying event. Example state portions 126 indicative of a current state of such time-varying events can include current scores, stock and/or commodity prices, election results, currency exchange rates, flight status indications (delayed, boarding, etc.), weather information, estimated time of arrival (ETA) for travel, and others. For instance, in the particular example of a sporting event, multiple state portions 126 can be included in floating user interface element 124 to describe a real-time or near real-time score associated with each competing party engaged in the sporting event as well as additional optional state portions 126 indicative of further observable aspects such as but not limited to elapsed event time, remaining event time, location conditions, and status of one or more competing parties or actions undertaken by the competing parties. In the particular example of an election, multiple state portions 126 can be included in a floating user interface element 124 to describe a real-time or near real-time posting of a number of total votes (e.g., popular votes, electoral votes, etc.) for each competing party in the election.

In some examples, state portions 126 can provide state information relative to a user of the electronic device 100 or to other third parties. For example, when a time-varying event corresponds to travel of a minor child, a state portion 126 can provide ETA travel details including the time left until the minor child arrives at a destination. Such details can be provided to an electronic device 100 operated by the parent/guardian as available via permissions provided via location-tracking software on a device operated by or otherwise co-located with the minor child. State portions 126 can include one or more visual indicators including text (e.g., names, numbers, or other parameters that are updated), icons (e.g., a circle or other shape having a time-varying volume that is updated), graphs (e.g., a visual graph representative of one or more stock values).

In some implementations, the user may be enabled to "pin" the dynamically updating user interface element 124 to a display 122 (e.g., a screen provided via display device 120) of the electronic device 100 so that display of the user interface element 124 persists across different operational modes of the electronic device 100 and/or despite user activity or input directed to an alternative application, element, or feature concurrently presented on the display 122 of the electronic device 100. In addition, in some implementations, the user interface element 124 can be movable, expandable to receive additional information, collapsible to receive more concise information, and/or interactive in other ways as further described herein. Thus, in addition or alternatively to pinning the user interface element 124, the user can re-size and move the user interface element 124 to best allocate display space to various competing display features. By providing a display feature that persists across different operational modes of the electronic device 100 and/or is movable within the display 122, users can be advantageously provided consistent access to real-time or near real-time event and state information without detracting from their ability to continue using the electronic device 100 for other purposes.

Referring still to FIG. 1, electronic device 100 can implement aspects of the disclosed technology including an event notification application 102. In general, the event notification application 102 can be configured to receive instructions indicative of a request for information associated with one or more time-varying events. Each time-varying event (e.g., a sports match) can have state portions (e.g., score of the home team, score of the away team) that can vary over time, and whose updates are of informative importance to a user.

In some implementations, the instructions indicative of a request for information associated with a time-varying event can be received via one or more of the user event subscription system 104 and/or the automated event determination system 106. For example, these instructions can be user-initiated instructions received via the electronic device 100 (e.g., as part of user event subscription system 104). For example, the user-initiated instructions can be received via an application (e.g., a search or browser application) that provides selectable buttons for identifying which time-varying events are of interest to a user of the electronic device. Sometimes the selectable buttons can be provided per event, while other times the selectable buttons can be provided per category of event such that every time-varying event falling within a given category (e.g., all sports games played by a particular sports team) will be selectable on a subscription-like basis. In some implementations, automated event determination system 106 can be configured to automatically determine (e.g., via one or more machine-learned models) time-varying events of potential interest to a user of the electronic device 100 by considering user profile data, user activity history, etc. when a user selects to make such data available to the automated event determination system 106.

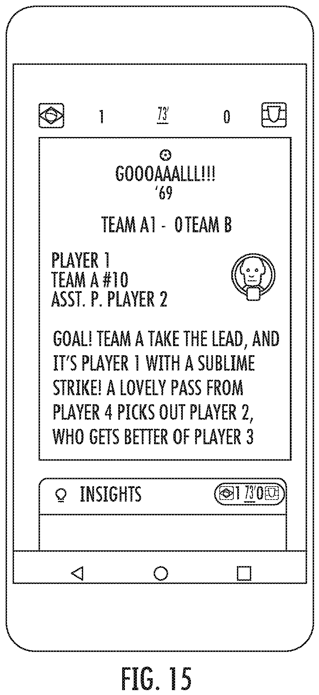

After identification of one or more time-varying events, event information access system 108 can be configured to access current state information associated with each time-varying event and initiate display on the display device 120 of a floating user interface element 124 including one or more state portions 126 respectively indicative of a current state associated with the time-varying event. The event information access system 108 can obtain real-time or near real-time updates for the time-varying event and can be configured to dynamically update the state portions 126 within the floating user interface element 124 when the current state changes relative to a previous state. In some implementations, event information access system 108 is implemented using poll technology whereby electronic device 100 is a client device configured to consistently or periodically reach out to a server for updates. In other implementations, event information access system is implemented using push technology, whereby a server proactively sends out updates to all clients, including electronic device 100. Additional exemplary aspects of such client-server interaction for obtaining event information and updates is illustrated in and described with reference to FIG. 15.

Referring still to FIG. 1, each floating user interface element 124 can be configured for display in a manner whereby it floats on top of anything else displayed within display 122. For instance, a floating user interface element 124 can remain visible on the display device 120 across multiple different user interface screens associated with multiple different programs, applications, control menus, windows, and/or the like accessed by the electronic device. Alternatively, a user can define by instructions received via display modification system 110 certain other elements which supersede the floating user interface element 124 and/or certain other elements which do not supersede the floating user interface element 124.

In one example, when the electronic device 100 is a computing device (e.g., a smartphone, laptop, personal computer, mobile device, etc.), the floating user interface element 124 can be configured to remain visible on the display device 120 across multiple different software applications running on the computing device. For instance, the floating user interface element 124 can persist in a designated location on the display device 122 even while a user operates the computing device such that display 122 switches from a first user interface screen associated with a home screen to a second user interface screen associated with a first application (e.g., a chat application) to a third user interface screen associated with a second application (e.g., a navigation application), or others.

In another example, when the electronic device 100 is a television, the floating user interface element 124 can be configured to remain visible on the display device 120 across multiple different channels accessed for viewing on the television. For instance, the floating user interface element 124 can persist in a designated location on the display device 120 even while a user operates the television such that the display 122 switches from a first user interface screen associated with a first channel (e.g., a television guide screen) to a second user interface screen associated with a second channel (e.g., a first program channel such as a local news station) to a third user interface screen associated with a third channel (e.g., a second program channel such as a sports station).

According to another example aspect of the present disclosure, the electronic device 100 can be configured to activate an attention grabbing behavior associated with the electronic device 100 when the current state of a variable associated with the time-varying event (e.g., one or more state portions 126) changes relative to a previous state. For example, if a state portion 126 corresponds to a score of a sports game, and the score changes or the game ends, then this change can be configured to not only update the data within state portion(s) 126 provided within the floating user interface element 124, but also generate a device output (e.g., an audio sound output, a light or animated video output, a haptic feedback output such as a vibration of the electronic device 100, etc.) As examples, the light or animated video output can include flashing light, change in color(s), change in size of the element, change in location of the element, and/or various other effects that serve to draw the user's visual interest to the user interface element 124. These effects (e.g., light or animated video output) can be temporary and can revert to the standard state after a certain period of time.

Although FIG. 1 illustrates only a single floating user interface element 124 within display 122, it should be appreciated that floating user interface elements 124 can be configured and coordinated for display in accordance with multiple time-varying events. Support for multiple time-varying events can be provided in a variety of different manners. For instance, in one example implementation, a single floating user interface element 124 can include information about multiple time-varying events by including one or more state portions 126 respectively indicative of a current state associated with each of a plurality of the multiple time-varying events. In another example implementation, multiple floating user interface elements 124 can be provided for display on the display device 120. Each of the multiple floating user interface elements 124 can respectively include one or more state portions 126 respectively indicative of a current state associated with a corresponding time-varying event.

Referring still to FIG. 1, in some implementations, display modification system 110 can be configured to receive instructions from a user for modifying display of floating user interface elements as described herein. For instance, display modification system 110 can receive user input via a touch-screen associated with display device 120, a mouse, keyboard, joystick, eye-controller or other input device associated with electronic device 100. In some implementations, a user of electronic device 100 can provide input indicative of instructions to
"pin" the dynamically updating user interface element to a display 122 of the electronic device 100. Additionally or alternatively, a user of electronic device 100 can provide input indicative of instructions to move, expand, collapse and/or take other interaction with floating user interface element 124. Thus, in addition or alternatively to pinning the user interface element 124, the user can re-size and move the user interface element 124 to best allocate display space to various competing display features. Additional aspects of such potential interaction with user interface element 124 are depicted in and described with reference to FIGS. 2-7.

Referring now to FIG. 2, example movement of a floating user interface element 124 from a first display location 132 to a second display location 134 is depicted. As previously described, each floating user interface element 124 can be selectively moveable across a display 122 provided on display device 122. This can be particularly useful when a user of an electronic device (e.g., electronic device 100 of FIG. 1) prefers for the floating user interface element 124 to be in a user-customizable location or in a different location depending on which program is currently being operated or otherwise viewed on the display device 120. More particularly, in some implementations, an event notification application 102 or other component of an electronic device 100 can be configured to receiving movement instructions indicative of a request to move a location of the floating user interface element 124 from a first display location 132 to a second display location 134 on the display device 120. When the display device 120 includes a touch-screen display device, the movement instructions can be received, for example, in response to a touch gesture 136 received on the touch-screen display device 120 of the floating user interface element 124 at the first display location 132 and a drag gesture 138 received on the touch-screen display device 120 to the second display location 134. In response to receiving the movement instructions, the floating user interface element 124 can then be moved from the first display location 132 to the second display location 134 on the display device 122.

In some implementations, the floating user interface element 124 can be snapped to an edge of a display screen as it is moved from one location to another. In other implementations, a different framework of movement parameters can be employed, or no limitations at all can be placed such that user interface element 124 can be moved/dragged to any location on a display screen.

FIG. 3 depicts an example enlarging of a floating user interface element 124 from a first display size 140 to a second display size 142, according to example embodiments of the present disclosure. More particularly, a floating user interface element 124 can be initially configured to occupy a limited portion of overall screen real estate (e.g., first size 140) available on a display device 122. However, the floating user interface element 124 can be selectable (e.g., via hard touch 144 on a touch-screen display device 120) or otherwise adapted to expand from an initial first display size 140 to a larger second display size 142.

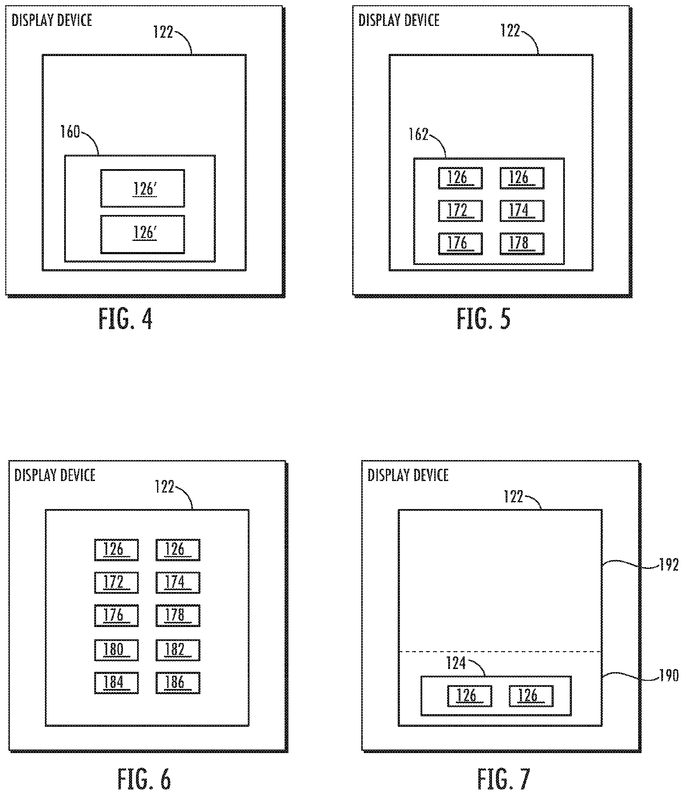

Referring to FIG. 4, in some implementations, the larger second display size of a floating user interface element can accommodate display of the same information as contained in the first display size of floating user interface element, but with an enlarged font. As such, if the first display size 140 of a user interface element 124 included state portions 126 as depicted in FIG. 1, then a second larger display size 142 of the user interface element 124 can correspond to user interface element 160 of FIG. 4, which includes the same content of state portions 126 but with a larger font size.

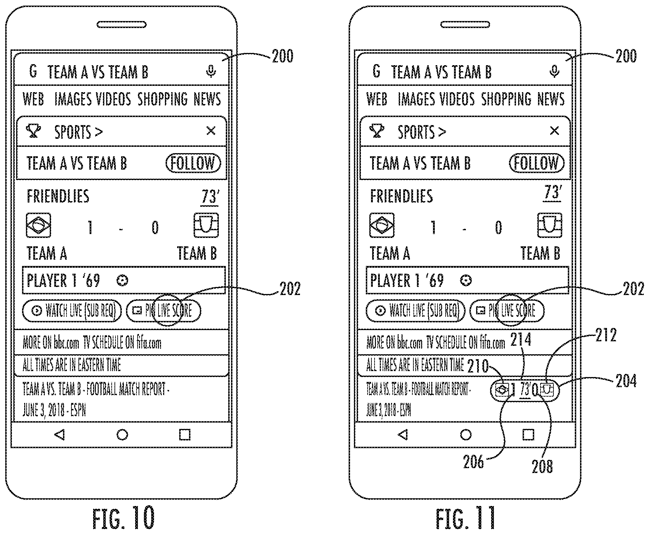

Referring to FIG. 5, in some implementations, the larger second display size of a floating user interface element can accommodate display of additional information associated with the time-varying event that was not contained in the first display size of floating user interface element. As such, if the first display size 140 of a user interface element 124 included state portions 126 as depicted in FIG. 1, then a second larger display size 142 of the user interface element 124 can correspond to user interface element 162 of FIG. 5, which includes state portions 126 as well as portions 172, 174, 176 and/or 178 that provide additional information. For instance, if state portions 126 only included a score for a home team and a score for an away team for a sports event, then additional portions 172, 174, 176 and 178 can provide additional information such as the time remaining in the sports event, the location and/or weather conditions at the sporting event, the name and/or record of the home and away teams, etc. Another example of a larger display size with additional information is depicted in FIG. 11.

FIG. 6 provides a still further example of a larger display size that occupies a substantial entirety of display device 122. The larger display size of FIG. 6 accommodates display of original state portions 126 as well as portions 172, 174, 176, 178, 180, 182, 184, and/or 186 that provide additional information. In some implementations, the larger display size of FIG. 6 can be provided upon selection or activation by a user from an initial display size (e.g., first display size 140). In some implementations, the larger display size of FIG. 6 can be provided upon selection or activation by a user from second display size 142 such that the larger display size of FIG. 6 corresponding to a full screen display corresponds to a third display size that is subsequently activated and larger than the second display size 142.

In some implementations, a user interface element can be collapsible after having been expanded in a fashion as described herein. Instructions can be received based on user interaction with an electronic device indicating a request to collapse the user interface elements. In some examples, for instance, a floating user interface element can be completely removed when a user drags the interface element to a predetermined location on a display screen (e.g., a location on the bottom of a display screen having an "X" symbol representative of an action to close the interface element).

FIG. 7 depicts a split-screen mode that can be made available as an alternative user interface option for use with floating user interface elements as described herein. For instance, a display device can be configured to define a display 122 having first and second portions 190, 192 that are distinct and non-overlapping. The floating user interface element(s) 124 can be configured to remain visible on the display device within a first portion 190 of the display device. The second portion 192 of the display device can be configured to display multiple different user interface screens associated with multiple different programs accessed by the electronic device (e.g., electronic device 100 of FIG. 1). By fixing at least one dimension associated with the first portion 190 of the display device (e.g., a height dimension), then the floating user interface element 124 can always occupy a limited screen height. Other applications can be configured to detect initiated display of the floating user interface element(s) 124 within the first portion 190 and use only the second portion 192 of the display device for their user interfaces, thus ensuring that the floating user interface elements 124 never hide any information associated with other currently active applications or channels on the electronic device.

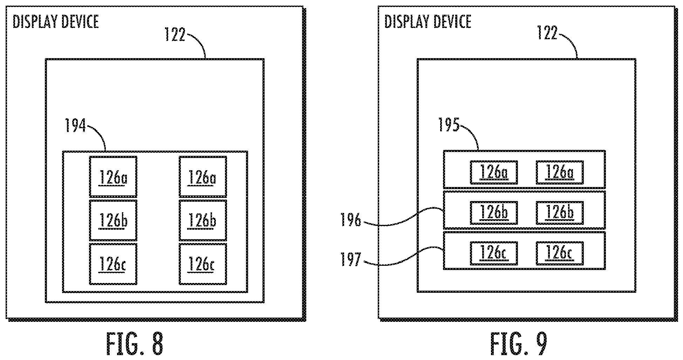

FIGS. 8-9 depict respective examples of displaying information associated with multiple time-varying events in accordance with aspects of the disclosed technology. For example, FIG. 8 depicts a first example implementation of displaying information associated with multiple time-varying events. In FIG. 8, a display device can be configured to define a display 122 having a single floating user interface element 194 associated with multiple time-varying events. More particularly, single floating user interface element 194 can include one or more state portions respectively indicative of a current state associated with each of the multiple time-varying events. For instance, single floating user interface element 194 includes one or more state portions 126a associated with a first time-varying event, one or more state portions 126b associated with a second time-varying event, and one or more state portions 126c associated with a third-time varying event, all provided within the confines of the single floating user interface element 194. Although FIG. 8 depicts two state portions each for three different time-varying events, it should be appreciated that the single floating user interface element 194 can be configured to provide information using any number of state portions for any number of multiple time-varying events.

FIG. 9 depicts a second example implementation of displaying information associated with multiple time-varying events. In FIG. 9, a display device can be configured to define a display 122 having multiple floating user interface elements 195-197, each associated with one of multiple time-varying events. In such example, each floating user interface element 195-197 can include one or more state portions respectively indicative of a current state associated with a corresponding time-varying event. For instance, floating user interface element 195 can include one or more state portions 126a associated with a first time-varying event, while floating user interface element 196 can include one or more state portions 126b associated with a second time-varying event, and floating user interface element 197 can include one or more state portions 126c associated with a third time-varying event. Each of the multiple floating user interface elements 195-197 can be configured to remain visible on the display device across multiple different user interface screens associated with multiple different programs accessed by the electronic device. Although FIG. 9 depicts two state portions each for three different floating user interface elements, it should be appreciated that additional or alternative configurations of the number of state portions, number of time-varying events, and/or number of floating user interface elements are possible.

Referring now to FIGS. 10-15, a specific example implementation of the disclosed technology configured to provide dynamically updating user interface elements and related information for soccer games is depicted. FIGS. 10-15 respectively depict various displays (e.g., displays 122 of FIG. 1) configured for display on a display device (e.g., display device 120 of FIG. 1).

FIG. 10 depicts an example display 200 corresponding to a user interface screen within a search browser application running on an electronic device (e.g., a mobile computing device). Display 200 includes information associated with a time-varying event corresponding to a soccer game played between an away team (e.g., Team A) and a home team (e.g., Team B). The search browser application includes a selectable button 202 (e.g., a button reading "Pin live score") that is selectable by a user of the electronic device to initiate instructions for initiating display of a floating user interface element associated with the soccer game of interest.

After user selection of the selectable button 202 of FIG. 10, an event notification application as described herein can initiate display of floating user interface element 204 as depicted in FIG. 11. Floating user interface element 204 includes a first state portion 206 corresponding to a score for the away team (e.g., Team A) and a second state portion 208 corresponding to a score for the home team (e.g., Team B). Additional information included within the floating user interface element 204 can include an icon 210 corresponding to the flag or other logo associated with the away team (e.g., Team A), an icon 212 corresponding to the flag or other logo associated with the home team (e.g., Team B), and a third portion 214 indicative of the time elapsed in the game (e.g., 73 minutes). The information contained within the first state portion 206, second state portion 208, and third state portion 214 can be monitored and updated appropriately when a current state changes relative to a previous state.

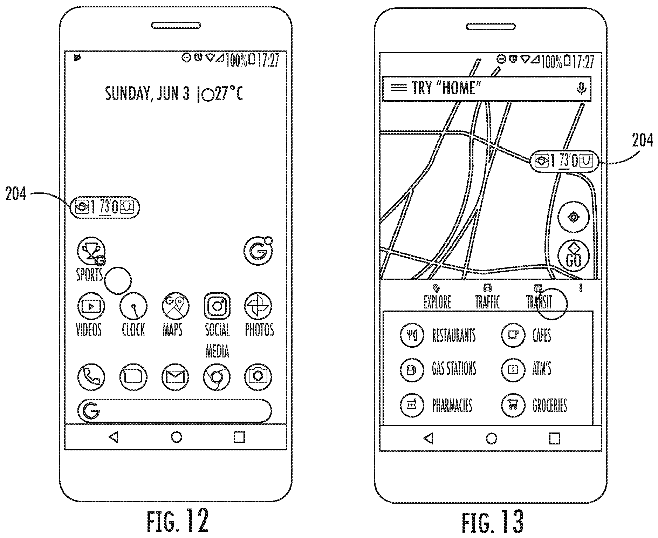

The floating user interface element 204 depicted in FIG. 11 can be configured to remain visible on the display device across multiple different user interface screens associated with multiple different programs accessed by an electronic device, such as depicted in the different display screens of FIGS. 11-13. For example, floating user interface element 204 can persist on the display device even while a user operates the computing device such that it switches from a first user interface screen (e.g., a user interface screen associated with a search browser application as depicted in FIG. 11) to a second user interface screen (e.g., a user interface screen associated with a home page as depicted in FIG. 12) to a third user interface screen (e.g., a user interface screen associated with a navigation application as depicted in FIG. 13). The floating user interface element persisting across different user interface screens as depicted in FIGS. 11-13 are depicted as having been moved to different locations within the respective displays (e.g., by touching and dragging gestures received from a user), although without such gestures it should be appreciated that floating user interface element 204 could remain fixed in a predetermined location relative to the display screen.

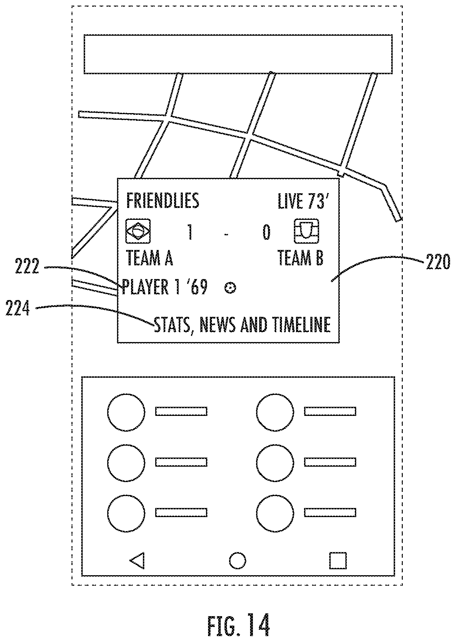

FIGS. 14-15 depict additional aspects of user selection to expand a floating user interface element 204 such as illustrated in FIG. 13. In some implementations, a user can select the floating user interface element 204 of FIG. 13, resulting in a shift from a first display size to a second larger display size. The second larger display size of floating user interface element 220 of FIG. 14 includes the original state portions 206-214 in a larger font size (e.g., than that depicted in FIG. 13), as well as additional information that was not included in the first display size of FIG. 13. For instance, floating user interface element 220 additionally includes a portion 222 with information about the location and weather condition (e.g., temperature) of the game, and a portion 224 corresponding to a selectable link to more information about the time-varying event (e.g., Statistics, news and timeline associated with the soccer game). Upon user selection of the portion 224 of FIG. 14, the event notification application can be configured to provide a full-screen display such as depicted in FIG. 15 of the game statistics, news and timeline. It should be appreciated that such a full-screen display can include a wide variety of details and information that can be varied and customizable in accordance with the type(s) of time-varying events, user preferences, and the like.

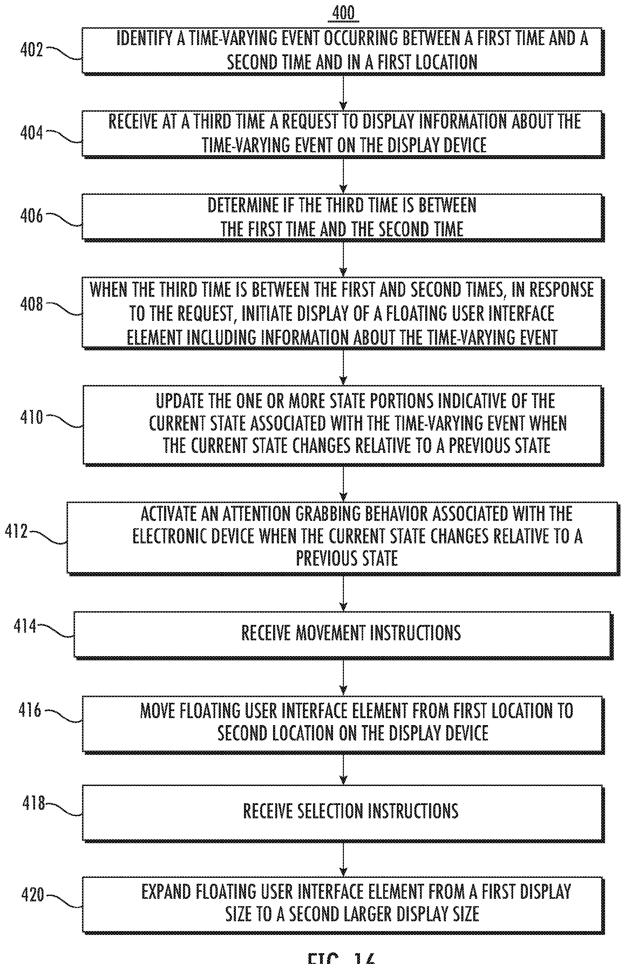

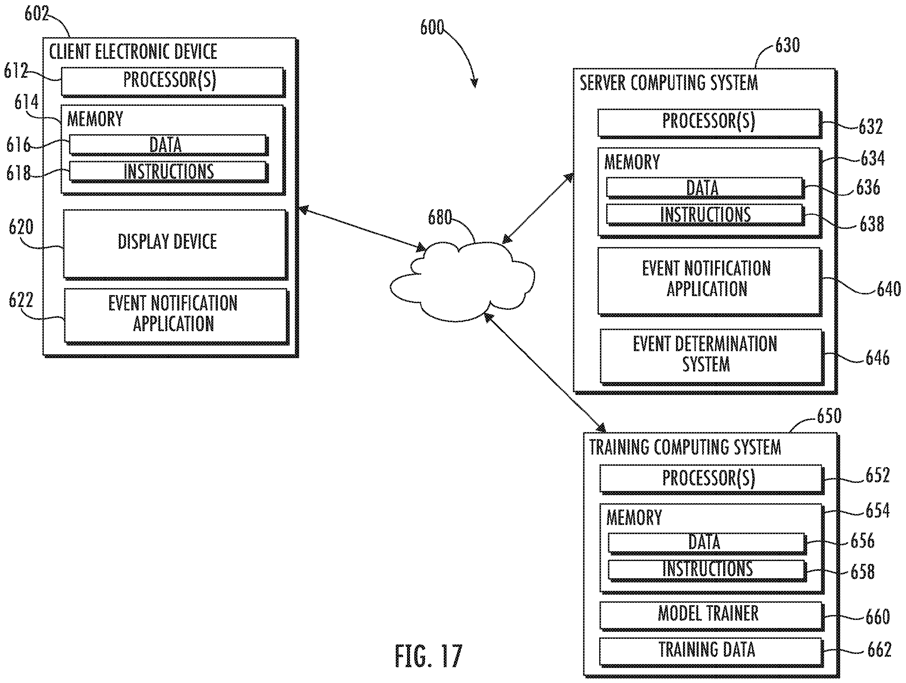

FIG. 16 depicts a flow chart diagram of an example method for dynamically displaying a floating user interface element within graphical user interfaces configured for display on a display device associated with an electronic device. Although FIG. 16 depicts steps performed in a particular order for purposes of illustration and discussion, the methods of the present disclosure are not limited to the particularly illustrated order or arrangement. The various steps of the method 400 can be omitted, rearranged, combined, and/or adapted in various ways without deviating from the scope of the present disclosure. In some embodiments, various steps of the method 400 can be performed by one or more computing systems (e.g., electronic device 100 of FIG. 1, client electronic device 602 of FIG. 17, and/or server computing system 630 of FIG. 17).

At 402, an electronic device including one or more computing devices, processors, or the like identifies a time-varying event occurring between a first time and a second time. The time-varying event identified at 402 is at a first location (e.g., a physical location that is different than a second location such as a current location of the electronic device).

In some implementations, the first time associated with the time-varying event identified at 402 can correspond to a start time of the time-varying event (e.g., the kickoff time of a soccer game). In some implementations, the first time can be associated with the start time of the time-varying event, but can additionally include a window of buffer time (e.g., one hour before the event begins). In some implementations, the second time associated with the time-varying event identified at 402 can correspond to an end time of the time-varying event. In some implementations, the second time can start as or depend on an estimated end time. However, the estimated end time can be monitored and tracked to keep up with an actual end time. In this manner, if an estimated end time is extended due to weather, longer game play, or other circumstances, the second time can be dynamically updated. In some implementations, the second time can be associated with an end time, but can additionally include a window of buffer time (e.g., one hour after the event ends).

In some implementations, according to another aspect of the disclosed technology, the first and second times associated with a time-varying event can be used to help determine when to initiate display of floating user interface elements. For example, at 404, the electronic device receives at a third time a request to display information about the time-varying event.
In some implementations, the request received at 404 can be received via manual interaction from a user event subscription system 104 such as depicted in FIG. 1 and/or in an automated fashion via automated event determination system 106 such as depicted in FIG 1. For example, receiving a request for information associated with the time-varying event at 404 can include receiving user-initiated instructions via the electronic device. In another example, receiving a request for information associated with the time-varying event at 404 can include receiving an automated determination from an event determination system accessed by the electronic device, the event determination system configured to determine time-varying events associated with a user of the electronic device.

At 406, an electronic device makes a determination regarding whether the third time is between the first time and the second time. When a determination is made at 406 that the third time is between the first time and the second time, the electronic device initiates display at 408 of a floating user interface element including information about the time-varying event, in response to the request received at 404. The floating user interface element displayed at 408 includes more state portions respectively indicative of a current state associated with the time-varying event. Additionally, the floating user interface element displayed at 408 can be configured to remain visible on the display device across multiple different user interface screens associated with multiple different programs accessed by the electronic device. In some implementations, such as when the electronic device is a computing device, the multiple different programs accessed by the electronic device can include multiple different software applications running on the computing device. In other implementations, such as when the electronic device is a television, the multiple different programs accessed by the electronic device can include multiple different channels accessed for viewing on the television.

When a determination is made at 406 that the third time is not between the first time and the second time, no action can be taken or a different action can be initiated. For example, display of a message can be initiated on the display device. A message displayed in response to the third time not being between the first time and the second time can include a message notifying a user of the electronic device that the time-varying event is not "live" or that an option for displaying information about the time-varying event is not currently available. In some implementations, if the third time is after the second time, the message can include a static message displaying information about the time-varying event. For instance, the static message can include final results associated with a time-varying event. However, those final results will not be dynamically updated because real-time updates are no longer available and/or applicable. In some implementations, if the third time is before the first time, a subscription to the time-varying event can be initiated in response to the request. As such, a user can be signed up to receive information about the time-varying event via the disclosed floating user interface elements when the first time arrives.

In some implementations, the request received at 404 is indicative of a request for information associated with multiple time-varying events (e.g., multiple sports games, stock tickers, or the like). In response, in some implementations, a single floating user interface element initiated for display at 408 can include one or more state portions respectively indicative of a current state associated with each of the multiple time-varying events. In response, in other implementations, multiple floating user interface elements can be initiated for display on a display device. In such example, each floating user interface element can include one or more state portions respectively indicative of a current state associated with a corresponding time-varying event. In addition, the multiple floating user interface elements can be configured to remain visible on the display device across multiple different user interface screens associated with multiple different programs accessed by the electronic device.

In some implementations, the floating user interface element displayed at 408 can be configured to remain visible on the display device within a first portion of the display device and wherein a second portion of the display device is configured to display multiple different user interface screens associated with multiple different programs accessed by the electronic device, wherein the first portion of the display device and the second portion of the display device are distinct and non-overlapping portions.

At 410, the electronic device updates the one or more state portions indicative of the current state associated with the time-varying event when the current state changes relative to a previous state. Additionally or alternatively, at 412, the electronic device can include generating a device output associated with the electronic device when the current state changes relative to a previous state. The device output generated at 412 can be an attention-grabbing behavior such as one or more of an audio sound output, an animated video output, and a haptic feedback output.

At 414, the electronic device can be configured to receive movement instructions indicative of a request to move the floating user interface element from a first display location to a second display location on the display device. In some implementations, such as when the display device is a touch-screen display device and the floating user interface element is moveable across the display device, the movement instructions received at 410 are received in response to a touch gesture received on the touch-screen display device of the floating user interface element at the first display location and drag gesture received on the touch-screen display device to the second display location.

In response to receipt of the movement instructions received at 414, the electronic device can be configured to move at 416 the floating user interface element from the first display location to the second display location on the display device.

At 418, the electronic device can be configured to receive selection instructions indicative of a request to select the floating user interface element. In response to receipt of the selection instructions received at 418, the electronic device can be configured to expand at 420 the floating user interface element from a first display size to a second display size that is larger than the first display size. In some implementations, expanding the floating user interface element from the first display size to the second display size at 420 includes providing additional information associated with the time-varying event within the floating user interface element having the second display size. In some implementations, expanding the floating user interface element from the first display size to the second display size at 420 includes enlarging a font of the information included within floating user interface element having the second display size.

FIG. 17 depicts a block diagram of an example computing system 600 that performs event notification using floating user interface elements according to example embodiments of the present disclosure. The computing system 600 can include a client electronic device 602, a server computing system 630, and a training computing system 650 that are communicatively coupled over a network 680.

The client electronic device 602 can be any type of electronic device, such as, for example, a personal computing device (e.g., laptop or desktop), a mobile computing device (e.g., smartphone or tablet), a gaming console or controller, a wearable computing device, an embedded computing device, a smart home device such as a television, or any other type of electronic device having computing functionality and a display device 620 (e.g., a touch-screen display device). In some implementations, client electronic device 602 can correspond to or include one or more features of the electronic device 100 depicted in FIG. 1 and described herein.

The client electronic device 602 includes one or more processors 612 and a memory 614. The one or more processors 612 can be any suitable processing device (e.g., a processor core, a microprocessor, an ASIC, a FPGA, a controller, a microcontroller, etc.) and can be one processor or a plurality of processors that are operatively connected. The memory 614 can include one or more non-transitory computer-readable storage mediums, such as RAM, ROM, EEPROM, EPROM, flash memory devices, magnetic disks, etc., and combinations thereof. The memory 614 can store data 616 and instructions 618 which are executed by the processor 612 to cause the client electronic device 602 to perform operations.

In some implementations, the client electronic device 602 can store or include an event notification application 622, which can correspond, for example, to event notification application 102 of FIG. 1. In some implementations, one or more portions of the event notification application 622 can be received from the server computing system 630 over network 680, stored in the client electronic device memory 614, and then used or otherwise implemented by the one or more processors 612.

Additionally or alternatively, one or more portions of the event notification application 622 can be included in or otherwise stored and implemented by the server computing system 630 that communicates with the client electronic device 602 according to a client-server relationship. For example, the event notification application 640 can be implemented by the server computing system 630 as a portion of a web service (e.g., a brand penetration determination service). Thus, one or more applications 622 can be stored and implemented at the client electronic device 602 and/or one or more applications 640 can be stored and implemented at the server computing system 630.

The server computing system 630 includes one or more processors 632 and a memory 634. The one or more processors 632 can be any suitable processing device (e.g., a processor core, a microprocessor, an ASIC, a FPGA, a controller, a microcontroller, etc.) and can be one processor or a plurality of processors that are operatively connected. The memory 634 can include one or more non-transitory computer-readable storage mediums, such as RAM, ROM, EEPROM, EPROM, flash memory devices, magnetic disks, etc., and combinations thereof. The memory 634 can store data 636 and instructions 638 which are executed by the processor 632 to cause the server computing system 630 to perform operations.

As described above, the server computing system 630 can store or otherwise include one or more portions of an event notification application 640. In some implementations, the server computing system 630 includes or is otherwise implemented by one or more server computing devices. In instances in which the server computing system 630 includes plural server computing devices, such server computing devices can operate according to sequential computing architectures, parallel computing architectures, or some combination thereof.

In some implementations, an event notification application as described herein can be implemented using client-side rendering logic. For example, event notification application 622 can include client-side code including logic for rendering the disclosed user interfaces and floating user interface elements. The event notification application 622 can sometimes include event-specific (e.g., sport-specific) rendering logic. In some implementations, the rendering logic is service-side rendering logic such that event notification application 640 can include server-side code including logic for rendering the disclosed user interfaces and floating user interface elements. In this latter instance, the event notification application 622 can include lightweight code that can render any user interface element described by the server in an agreed upon manner. This could allow the same client-side code to be used for different types of time-varying events (e.g., sports games and stock tickers), without requiring code updates to the client.

In some implementations, the client electronic device 602 and/or the server computing system 630 can train models (e.g., an event determination model provided within automated event determination system 106 and configured to determine events of interest to a particular user) provided within event notification application 622/640 via interaction with the training computing system 650 that is communicatively coupled over the network 680. The training computing system 650 can be separate from the server computing system 630 or can be a portion of the server computing system 630.

The training computing system 650 includes one or more processors 652 and a memory 654. The one or more processors 652 can be any suitable processing device (e.g., a processor core, a microprocessor, an ASIC, a FPGA, a controller, a microcontroller, etc.) and can be one processor or a plurality of processors that are operatively connected. The memory 654 can include one or more non-transitory computer-readable storage mediums, such as RAM, ROM, EEPROM, EPROM, flash memory devices, magnetic disks, etc., and combinations thereof. The memory 654 can store data 656 and instructions 658 which are executed by the processor 652 to cause the training computing system 650 to perform operations. In some implementations, the training computing system 650 includes or is otherwise implemented by one or more server computing devices.

The training computing system 650 can include a model trainer 660 that trains the machine-learned models (e.g., an event determination model) stored at the client electronic device 602 and/or the server computing system 630 using various training or learning techniques, such as, for example, backwards propagation of errors. In some implementations, performing backwards propagation of errors can include performing truncated backpropagation through time. The model trainer 660 can perform a number of generalization techniques (e.g., weight decays, dropouts, etc.) to improve the generalization capability of the models being trained.

In particular, the model trainer 660 can train the event determination model or other models based on a set of training data 662. The training data 662 can include, for example, data provided as an input to the event determination models, and data provided as an output of the event determination models in response to the input data. The model trainer 660 can train the models in an unsupervised manner by using the input data and the output data of training data 662.

The model trainer 660 includes computer logic utilized to provide desired functionality. The model trainer 660 can be implemented in hardware, firmware, and/or software controlling a general purpose processor. For example, in some implementations, the model trainer 660 includes program files stored on a storage device, loaded into a memory and executed by one or more processors. In other implementations, the model trainer 660 includes one or more sets of computer-executable instructions that are stored in a tangible computer-readable storage medium such as RAM hard disk or optical or magnetic media.

The network 680 can be any type of communications network, such as a local area network (e.g., intranet), wide area network (e.g., Internet), or some combination thereof and can include any number of wired or wireless links. In general, communication over the network 680 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

Features illustrated or described as part of one embodiment can be used with another embodiment to yield a still further embodiment.

## Claims

1. An electronic device (100), comprising:
a display device (120);
one or more processors;
at least one tangible, non-transitory computer-readable medium that stores instructions that, when executed by the one or more processors, cause the electronic device to perform operations, the operations comprising:
identifying a time-varying event occurring between a first time and a second time and in a first location, the first location different than a second location of the electronic device;
receiving at a third time a request to display information about the time-varying event on the display device;
determining if the third time is between the first time and the second time; and
in response to the request, when the third time is determined to be between the first time and the second time, initiating display of a floating user interface element (124) on the display device, wherein the floating user interface element displays information related to the time-varying event, wherein:
the information related to the time-varying event comprises at least one current state associated with the time-varying event displayed in a current state portion of the floating user interface element
the floating user interface element is configured to remain visible on the display device across multiple different user interface screens associated with multiple different programs accessed by the electronic device based on a user selection in a search browser application; and
the one or more processors is configured to update the current state portion of the floating user interface element when the at least one current state changes relative to a previous state.

2. The electronic device (100) of claim 1, the operations further comprising in response to the request, when the third time is not between the first time and the second time, initiating display of a message on the display device (120), wherein the message includes a notification to a user of the electronic device (100).

3. The electronic device (100) of claim 1 or claim 2, wherein the information related to the time-varying event comprises at least one current state associated with the time-varying event displayed in a current state portion of the floating user interface element (124).

4. The electronic device (100) of claim 3, the operations further comprising updating the at least one current state portion associated with the time-varying event when the at least one current state changes relative to a previous state, or the operations further comprising generating a device output associated with the electronic device (100) when the at least one current state portion changes relative to a previous state, wherein the device output comprises one or more of an audio sound output, an animated video output, and a haptic feedback output.

5. The electronic device (100) of any of claims 1 to 4, the operations further comprising:
receiving movement instructions indicative of a request to move the floating user interface element from a first display location to a second display location on the display device; and
in response to the receiving of the movement instructions, moving the floating user interface element from the first display location to the second display location on the display device, and optionally wherein:
the display device (120) comprises a touch-screen display device;
the floating user interface element (124) is moveable across the display device; and
the movement instructions indicative of the request to move the floating user interface element are received in response to a touch gesture received on the touch-screen display device of the floating user interface element at the first display location and drag gesture received on the touch-screen display device to the second display location.

6. The electronic device (100) of any of claims 1 to 5, the operations further comprising:
receiving selection instructions indicative of a request to select the floating user interface element; and
in response to the receiving of the selection instructions, expanding the floating user interface element from a first display size to a second display size that is larger than the first display size.

7. The electronic device (100) of claim 6, wherein expanding the floating user interface element from the first display size to the second display size comprises including additional information associated with the time-varying event within the floating user interface element having the second display size, or wherein expanding the floating user interface element from a first display size to a second display size comprises enlarging a font of the information included within floating user interface element having the second display size.

8. The electronic device (100) of any of claims 1 to 7, the operations further comprising receiving instructions indicative of a request to display information associated with multiple time-varying events, and wherein the floating user interface element comprises one or more state portions respectively indicative of a current state associated with each of the multiple time-varying events, and/or the operations further comprising:
receiving instructions indicative of a request to display information associated with multiple time-varying events; and
initiating display on the display device of multiple floating user interface elements, wherein each floating user interface element comprises one or more state portions respectively indicative of a current state associated with a corresponding time-varying event.

9. The electronic device (100) of any of claims 1 to 8, wherein the floating user interface element (124) is configured to remain visible on the display device (120) within a first portion of the display device and wherein a second portion of the display device is configured to display multiple different user interface screens associated with multiple different programs accessed by the electronic device (100), wherein the first portion of the display device and the second portion of the display device are distinct and non-overlapping portions.

10. A computer-implemented method for dynamically displaying a floating user interface element (124) within graphical user interfaces configured for display on a display device (120) associated with an electronic device (100), the method comprising:
identifying, by one or more processors associated with the electronic device, a time-varying event occurring between a first time and a second time and in a first location, the first location different than a second location of the electronic device;
receiving, by the one or more processors, at a third time a request to display information about the time-varying event on the display device;
determining, by the one or more processors, if the third time is between the first time and the second time;
in response to the request, when the third time is determined to be between the first time and the second time, initiating, by the one or more processors, display of a floating user interface element (124) on the display device (120), wherein the floating user interface element displays information related to the time-varying event, the information related to the time-varying event comprising at least one current state associated with the time-varying event displayed in a current state portion of the floating user interface element, and wherein the floating user interface element is configured to remain visible on the display device across multiple different user interface screens associated with multiple different programs accessed by the electronic device based on a user selection in a search browser application; and
updating, by the one or more processors, the current state portion of the floating user interface element when the at least one current state changes relative to a previous state.

11. The computer-implemented method of claim 10, further comprising receiving, by the one or more processors, instructions indicative of a request to display information associated with multiple time-varying events, and wherein the floating user interface element comprises one or more state portions respectively indicative of a current state associated with each of the multiple time-varying events.

12. The computer-implemented method of claim 10 or claim 11, the operations further comprising:
receiving, by the one or more processors, instructions indicative of a request to display information associated with multiple time-varying events; and
initiating, by the one or more processors, display on the display device of multiple floating user interface elements, wherein each floating user interface element comprises one or more state portions respectively indicative of a current state associated with a corresponding time-varying event, and/or the operations further comprising:
receiving, by the one or more processors associated with the electronic device (100), movement instructions indicative of a request to move the floating user interface element from a first display location to a second display location on the display device; and moving, by the one or more processors associated with the electronic device (100) and in response to the receiving of the movement instructions, the floating user interface element from the first display location to the second display location on the display device, and/or the operations further comprising:
receiving, by the one or more processors associated with the electronic device (100), selection instructions indicative of a request to select the floating user interface element; and
expanding, by the one or more processors associated with the electronic device (100), and in response to the receiving of the selection instructions, the floating user interface element from a first display size to a second display size that is larger than the first display size.

13. One or more tangible, non-transitory, computer-readable media storing computer executable instructions that when executed by one or more processors cause the one or more processors to perform operations, the operations comprising:
identifying a time-varying event occurring between a first time and a second time and in a first location, the first location different than a second location of the electronic device (100);
receiving at a third time a request to display information about the time-varying event on the display device (120);
determining if the third time is between the first time and the second time;
in response to the request, when the third time is determined to be between the first time and the second time, initiating display of a floating user interface element (124) on the display device, wherein the floating user interface element displays information related to the time-varying event, the information related to the time-varying event comprising at least one current state associated with the time-varying event displayed in a current state portion of the floating user interface element, and wherein the floating user interface element is configured to remain visible on the display device across multiple different user interface screens associated with multiple different programs accessed by the electronic device (100) based on a user selection in a search browser application; and
updating the current state portion of the floating user interface element when the at least one current state changes relative to a previous state.

14. The computer-implemented method of any one of claims 10 to 12, wherein the time-varying event is an election.

15. The the computer-implemented method of any one of claims 10 to 12, wherein:
the current state portion of the floating user interface element includes flight status indications, or wherein
the current state portion of the floating user interface element includes election results.

## Patentansprüche

1. Elektronische Vorrichtung (100), umfassend:
eine Anzeigevorrichtung (120),
einen oder mehrere Prozessoren;
mindestens einen materiellen nicht-transitorischen computerlesbare Datenträger, der Anweisungen speichert, die bei Ausführung durch den einen oder die mehreren Prozessoren die elektronische Vorrichtung dazu veranlassen, Vorgänge durchzuführen, wobei die Vorgänge Folgendes beinhalten:
Identifizieren eines zeitvariablen Ereignisses, das zwischen einem ersten Zeitpunkt und einem zweiten Zeitpunkt und an einem ersten Standort auftritt, wobei sich der erste Standort von einem zweiten Standort der elektronischen Vorrichtung unterscheidet;
Empfangen einer Anforderung, Informationen über das zeitvariable Ereignis auf der Anzeigevorrichtung anzuzeigen, zu einem dritten Zeitpunkt;
Bestimmen, ob der dritte Zeitpunkt zwischen dem ersten Zeitpunkt und dem zweiten Zeitpunkt liegt; und
als Reaktion auf die Anforderung und wenn bestimmt wird, dass der dritte Zeitpunkt zwischen dem ersten Zeitpunkt und dem zweiten Zeitpunkt liegt, Einleiten einer Anzeige eines variablen Benutzerschnittstellenelements (124) auf der Anzeigevorrichtung, wobei das variable Benutzerschnittstellenelement Informationen anzeigt, die das zeitvariable Ereignis betreffen, wobei:
die Informationen, die das zeitvariable Ereignis betreffen, mindestens einen aktuellen Zustand umfassen, der dem zeitvariablen Ereignis zugeordnet ist, das in einem Abschnitt im aktuellen Zustand des variablen Benutzerschnittstellenelements angezeigt wird
das variable Benutzerschnittstellenelement dazu konfiguriert ist, auf der Anzeigevorrichtung über mehrere unterschiedliche Benutzerschnittstellenbildschirme sichtbar zu bleiben, die mehreren unterschiedlichen Programmen zugeordnet sind, auf die durch die elektronische Vorrichtung basierend auf einer Benutzerauswahl in einer Suchbrowser-Anwendung zugegriffen wird; und
der eine oder die mehreren Prozessoren dazu konfiguriert sind, den Abschnitt im aktuellen Zustand des variablen Benutzerschnittstellenelements zu aktualisieren, wenn sich der mindestens eine aktuelle Zustand relativ zu einem vorherigen Zustand ändert.

2. Elektronische Vorrichtung (100) nach Anspruch 1, wobei die Vorgänge als Reaktion auf die Anforderung und wenn der dritte Zeitpunkt nicht zwischen dem ersten Zeitpunkt und dem zweiten Zeitpunkt liegt, ferner Einleiten einer Anzeige einer Nachricht auf der Anzeigevorrichtung (120) umfassen, wobei die Nachricht eine Benachrichtigung an einen Benutzer der elektronischen Vorrichtung (100) beinhaltet.

3. Elektronische Vorrichtung (100) nach Anspruch 1 oder Anspruch 2, wobei die Informationen, die das zeitvariable Ereignis betreffen, mindestens einen aktuellen Zustand umfassen, der dem zeitvariablen Ereignis zugeordnet ist, das in einem Abschnitt im aktuellen Zustand des variablen Benutzerschnittstellenelements (124) angezeigt wird.

4. Elektronische Vorrichtung (100) nach Anspruch 3, wobei die Vorgänge ferner Aktualisieren des mindestens einen Abschnitts im aktuellen Zustand, der dem zeitvariablen Ereignis zugeordnet ist, umfassen, wenn sich der mindestens eine aktuelle Zustand relativ zu einem vorherigen Zustand ändert, oder die Vorgänge ferner Generieren einer Vorrichtungsausgabe, die der elektronischen Vorrichtung (100) zugeordnet ist, umfassen, wenn sich der mindestens eine Abschnitt im aktuellen Zustand relativ zu einem vorherigen Zustand ändert, wobei die Vorrichtungsausgabe eine oder mehrere von einer Audiotonausgabe, einer animierten Videoausgabe und einer haptischen Rückkopplungsausgabe umfasst.

5. Elektronische Vorrichtung (100) nach einem der Ansprüche 1 bis 4, wobei die Vorgänge ferner Folgendes umfassen:
Empfangen von Bewegungsanweisungen, die eine Anforderung angeben, das variable Benutzerschnittstellenelement von einer ersten Anzeigeposition zu einer zweiten Anzeigeposition auf der Anzeigevorrichtung zu bewegen; und
Bewegen des variablen Benutzerschnittstellenelements von der ersten Anzeigeposition zu der zweiten Anzeigeposition auf der Anzeigevorrichtung als Reaktion auf das Empfangen der Bewegungsanweisungen, und wobei optional:
die Anzeigevorrichtung (120) eine Touchscreen-Anzeigevorrichtung umfasst;
das variable Benutzerschnittstellenelement (124) über die Anzeigevorrichtung bewegbar ist; und
die Bewegungsanweisungen, die die Anforderung zum Bewegen des variablen Benutzerschnittstellenelements angeben, als Reaktion auf eine an der Touchscreen-Anzeigeeinrichtung des variablen Benutzerschnittstellenelements an der ersten Anzeigeposition empfangene Berührungsbewegung und eine an der Touchscreen-Anzeigeeinrichtung an der zweiten Anzeigeposition empfangene Ziehbewegung empfangen wird.

6. Elektronische Vorrichtung (100) nach einem der Ansprüche 1 bis 5, wobei die Vorgänge ferner Folgendes umfassen:
Empfangen von Auswahlanweisungen, die eine Anforderung zum Auswählen des variablen Benutzerschnittstellenelements angeben; und
Ausdehnen des variablen Benutzerschnittstellenelements von einer ersten Anzeigegröße auf eine zweite Anzeigegröße, die größer als die erste Anzeigegröße ist, als Reaktion auf das Empfangen der Auswahlanweisungen.

7. Elektronische Vorrichtung (100) nach Anspruch 6, wobei das Ausdehnen des variablen Benutzerschnittstellenelements von der ersten Anzeigegröße auf die zweite Anzeigegröße Einschließen von zusätzlichen Informationen umfasst, die dem zeitvariablen Ereignis innerhalb des variablen Benutzerschnittstellenelements mit der zweiten Anzeigegröße zugeordnet sind, oder wobei das Ausdehnen des variablen Benutzerschnittstellenelements von einer ersten Anzeigegröße auf eine zweite Anzeigegröße Vergrößern einer Schriftart der Informationen umfasst, die in dem variablen Benutzerschnittstellenelement mit der zweiten Anzeigegröße beinhaltet sind.

8. Elektronische Vorrichtung (100) nach einem der Ansprüche 1 bis 7, wobei die Vorgänge ferner Empfangen von Anweisungen umfassen, die eine Anforderung zum Anzeigen von Informationen angeben, die mehreren zeitvariablen Ereignissen zugeordnet sind, und wobei das variable Benutzerschnittstellenelement einen oder mehrere Zustandsabschnitte umfasst, die jeweils einen aktuellen Zustand angeben, der jedem der mehreren zeitvariablen Ereignisse zugeordnet ist, und/oder wobei die Vorgänge ferner Folgendes umfassen:
Empfangen von Anweisungen, die eine Anforderung zum Anzeigen von Informationen angeben, die mehreren zeitvariablen Ereignissen zugeordnet sind; und
Einleiten einer Anzeige von mehreren variablen Benutzerschnittstellenelementen auf der Anzeigevorrichtung, wobei jedes variable Benutzerschnittstellenelement einen oder mehrere Zustandsabschnitte umfasst, die jeweils einen aktuellen Zustand angeben, der einem entsprechenden zeitvariablen Ereignis zugeordnet ist.

9. Elektronische Vorrichtung (100) nach einem der Ansprüche 1 bis 8, wobei das variable Benutzerschnittstellenelement (124) dazu konfiguriert ist, auf der Anzeigevorrichtung (120) innerhalb eines ersten Abschnitts der Anzeigevorrichtung sichtbar zu bleiben, und wobei ein zweiter Abschnitt der Anzeigevorrichtung dazu konfiguriert ist, mehrere unterschiedliche Benutzerschnittstellenbildschirme anzuzeigen, die mehreren unterschiedlichen Programmen zugeordnet sind, auf die durch die elektronische Vorrichtung (100) zugegriffen wird, wobei der erste Abschnitt der Anzeigevorrichtung und der zweite Abschnitt der Anzeigevorrichtung verschiedene und nicht überlappende Abschnitte sind.

10. Computerimplementiertes Verfahren zum dynamischen Anzeigen eines variablen Benutzerschnittstellenelements (124) innerhalb von grafischen Benutzerschnittstellen, die zum Anzeigen auf einer Anzeigevorrichtung (120) konfiguriert sind, die einer elektronischen Vorrichtung (100) zugeordnet ist, wobei das Verfahren Folgendes umfasst:
Identifizieren eines zeitvariablen Ereignisses, das zwischen einem ersten Zeitpunkt und einem zweiten Zeitpunkt und an einem ersten Standort auftritt, durch einen oder mehrere Prozessoren, die der elektronischen Vorrichtung zugeordnet sind, wobei sich der erste Standort von einem zweiten Standort der elektronischen Vorrichtung unterscheidet;
Empfangen einer Anforderung, Informationen über das zeitvariable Ereignis auf der Anzeigevorrichtung anzuzeigen, durch den einen oder die mehrere Prozessoren zu einem dritten Zeitpunkt;
Bestimmen, ob der dritte Zeitpunkt zwischen dem ersten Zeitpunkt und dem zweiten Zeitpunkt liegt, durch den einen oder die mehreren Prozessoren;
als Reaktion auf die Anforderung und wenn bestimmt wird, dass der dritte Zeitpunkt zwischen dem ersten Zeitpunkt und dem zweiten Zeitpunkt liegt, Einleiten einer Anzeige eines variablen Benutzerschnittstellenelements (124) auf der Anzeigevorrichtung (120) durch den einen oder die mehreren Prozessoren, wobei das variable Benutzerschnittstellenelement Informationen anzeigt, die das zeitvariable Ereignis betreffen, wobei die Informationen, die das zeitvariable Ereignis betreffen, mindestens einen aktuellen Zustand umfassen, der dem zeitvariablen Ereignis zugeordnet ist, das in einem Abschnitt im aktuellen Zustand des variablen Benutzerschnittstellenelements angezeigt wird, und wobei das variable Benutzerschnittstellenelement dazu konfiguriert ist, auf der Anzeigevorrichtung über mehrere unterschiedliche Benutzerschnittstellenbildschirme sichtbar zu bleiben, die mehreren unterschiedlichen Programmen zugeordnet sind, auf die durch die elektronische Vorrichtung basierend auf einer Benutzerauswahl in einer Suchbrowser-Anwendung zugegriffen wird; und
Aktualisieren des Abschnitts im aktuellen Zustand des variablen Benutzerschnittstellenelements durch den einen oder die mehreren Prozessoren, wenn sich der mindestens eine aktuelle Zustand relativ zu einem vorherigen Zustand ändert.

11. Computerimplementiertes Verfahren nach Anspruch 10, ferner umfassend Empfangen von Anweisungen, die eine Anforderung zum Anzeigen von Informationen angeben, die mehreren zeitvariablen Ereignissen zugeordnet sind, durch den einen oder die mehreren Prozessoren, und wobei das variable Benutzerschnittstellenelement einen oder mehrere Zustandsabschnitte umfasst, die jeweils einen aktuellen Zustand angeben, der jedem der mehreren zeitvariablen Ereignisse zugeordnet ist.

12. Computerimplementiertes Verfahren nach Anspruch 10 oder Anspruch 11, wobei die Vorgänge ferner Folgendes umfassen:
Empfangen von Anweisungen, die eine Anforderung zum Anzeigen von Informationen angeben, die mehreren zeitvariablen Ereignissen zugeordnet sind, durch den einen oder die mehreren Prozessoren; und
Einleiten einer Anzeige von mehreren variablen Benutzerschnittstellenelementen auf der Anzeigevorrichtung durch den einen oder die mehreren Prozessoren, wobei jedes variable Benutzerschnittstellenelement einen oder mehrere Zustandsabschnitte umfasst, die jeweils einen aktuellen Zustand angeben, der einem entsprechenden zeitvariablen Ereignis zugeordnet ist, und/oder wobei die Vorgänge ferner Folgendes umfassen:
Empfangen von Bewegungsanweisungen, die eine Anforderung zum Bewegen des variablen Benutzerschnittstellenelements von einer ersten Anzeigeposition zu einer zweiten Anzeigeposition auf der Anzeigevorrichtung angeben, durch den einen oder die mehreren Prozessoren, die der elektronischen Vorrichtung (100) zugeordnet sind; und
Bewegen des variablen Benutzerschnittstellenelements von der ersten Anzeigeposition zu der zweiten Anzeigeposition auf der Anzeigevorrichtung durch den einen oder die mehreren Prozessoren, die der elektronischen Vorrichtung (100) zugeordnet sind, und als Reaktion auf das Empfangen der Bewegungsanweisungen, und/oder wobei die Vorgänge ferner Folgendes umfassen:
Empfangen von Auswahlanweisungen, die eine Anforderung zum Auswählen des variablen Benutzerschnittstellenelements angeben, durch den einen oder die mehreren Prozessoren, die der elektronischen Vorrichtung (100) zugeordnet sind; und
Ausdehnen des variablen Benutzerschnittstellenelements von einer ersten Anzeigegröße auf eine zweite Anzeigegröße, die größer als die erste Anzeigegröße ist, durch den einen oder die mehreren Prozessoren, die der elektronischen Vorrichtung (100) zugeordnet sind und als Reaktion auf das Empfangen der Auswahlanweisungen.

13. Einen oder mehrere materielle nicht-transitorische computerlesbare Datenträger, die computerausführbare Anweisungen speichern, die bei Ausführung durch einen oder mehrere Prozessoren den einen oder die mehreren Prozessoren dazu veranlassen, Vorgänge durchzuführen, wobei die Vorgänge Folgendes umfassen:
Identifizieren eines zeitvariablen Ereignisses, das zwischen einem ersten Zeitpunkt und einem zweiten Zeitpunkt und an einem ersten Standort auftritt, wobei sich der erste Standort von einem zweiten Standort der elektronischen Vorrichtung (100) unterscheidet;
Empfangen einer Anforderung, Informationen über das zeitvariable Ereignis auf der Anzeigevorrichtung (120) anzuzeigen, zu einem dritten Zeitpunkt;
Bestimmen, ob der dritte Zeitpunkt zwischen dem ersten Zeitpunkt und dem zweiten Zeitpunkt liegt;
als Reaktion auf die Anforderung und wenn bestimmt wird, dass der dritte Zeitpunkt zwischen dem ersten Zeitpunkt und dem zweiten Zeitpunkt liegt, Einleiten einer Anzeige eines variablen Benutzerschnittstellenelements (124) auf der Anzeigevorrichtung, wobei das variable Benutzerschnittstellenelement Informationen anzeigt, die das zeitvariable Ereignis betreffen, wobei die Informationen, die das zeitvariable Ereignis betreffen, mindestens einen aktuellen Zustand umfassen, der dem zeitvariablen Ereignis zugeordnet ist, das in einem Abschnitt im aktuellen Zustand des variablen Benutzerschnittstellenelements angezeigt wird, und wobei das variable Benutzerschnittstellenelement dazu konfiguriert ist, auf der Anzeigevorrichtung über mehrere unterschiedliche Benutzerschnittstellenbildschirme sichtbar zu bleiben, die mehreren unterschiedlichen Programmen zugeordnet sind, auf die durch die elektronische Vorrichtung (100) basierend auf einer Benutzerauswahl in einer Suchbrowser-Anwendung zugegriffen wird; und
Aktualisieren des Abschnitts im aktuellen Zustand des variablen Benutzerschnittstellenelements, wenn sich der mindestens eine aktuelle Zustand relativ zu einem vorherigen Zustand ändert.

14. Computerimplementiertes Verfahren nach einem der Ansprüche 10 bis 12, wobei das zeitvariable Ereignis eine Wahl ist.

15. Computerimplementiertes Verfahren nach einem der Ansprüche 10 bis 12, wobei:
der Abschnitt im aktuellen Zustand des variablen Benutzerschnittstellenelements Flugstatusangaben beinhaltet oder wobei
der Abschnitt im aktuellen Zustand des variablen Benutzerschnittstellenelements Wahlergebnisse beinhaltet.

## Revendications

1. Dispositif électronique (100), comprenant :
un dispositif d'affichage (120) ;
un ou plusieurs processeurs ;
au moins un support non transitoire lisible par ordinateur, tangible qui stocke des instructions qui, lorsqu'elles sont exécutées par les un ou plusieurs processeurs, amènent le dispositif informatique à exécuter des opérations, les opérations comprenant :
l'identification d'un événement temporellement variable se produisant entre un premier instant et un deuxième instant et dans un premier emplacement, le premier emplacement étant différent d'un second emplacement du dispositif électronique ;
la réception à un troisième instant d'une demande pour afficher des informations relatives à l'événement temporellement variable sur le dispositif d'affichage ;
la détermination du fait de savoir si le troisième instant se situe entre le premier instant et le deuxième instant ; et
en réponse à la demande, lorsqu'il est déterminé que le troisième instant se situe entre le premier instant et le deuxième instant, le déclenchement de l'affichage d'un élément d'interface utilisateur flottant (124) sur le dispositif d'affichage, dans lequel l'élément d'interface utilisateur flottant affiche des informations relatives à l'événement temporellement variable, dans lequel :
les informations relatives à l'événement temporellement variable comprennent au moins un état actuel associé à l'événement temporellement variable affiché dans une partie d'état actuel de l'élément d'interface utilisateur flottant
l'élément d'interface utilisateur flottant est configuré pour rester visible sur le dispositif d'affichage sur de multiples écrans d'interface utilisateur différents associés à de multiples programmes différents auxquels le dispositif électronique accède sur la base d'une sélection d'utilisateur dans une application de navigateur de recherche ; et
les un ou plusieurs processeurs sont configurés pour mettre à jour la partie d'état actuel de l'élément d'interface utilisateur flottant lorsque l'au moins un état actuel change par rapport à un état précédent.

2. Dispositif électronique (100) selon la revendication 1, les opérations comprenant également en réponse à la demande, lorsque le troisième instant ne se situe pas entre le premier instant et le deuxième instant, le déclenchement de l'affichage d'un message sur le dispositif d'affichage (120), dans lequel le message comporte une notification à un utilisateur du dispositif électronique (100).

3. Dispositif électronique (100) selon la revendication 1 ou la revendication 2, dans lequel les informations relatives à l'événement temporellement variable comprennent au moins un état actuel associé à l'événement temporellement variable affiché dans une partie d'état actuel de l'élément d'interface utilisateur flottant (124).

4. Dispositif électronique (100) selon la revendication 3, les opérations comprenant également la mise à jour de l'au moins une partie d'état actuel associée à l'événement temporellement variable lorsque l'au moins un état actuel change par rapport à un état précédent, ou les opérations comprenant également la génération d'une sortie de dispositif associée au dispositif électronique (100) lorsque l'au moins une partie d'état actuel change par rapport à un état précédent, dans lequel la sortie de dispositif comprend une ou plusieurs sorties parmi une sortie audio sonore, une sortie vidéo animée et une sortie de rétroaction haptique.

5. Dispositif électronique (100) selon l'une quelconque des revendications 1 à 4, les opérations comprenant également :
la réception des instructions de déplacement indiquant une demande de déplacement de l'élément d'interface utilisateur flottant d'un premier emplacement d'affichage à un second emplacement d'affichage sur le dispositif d'affichage ; et
en réponse à la réception des instructions de déplacement, le déplacement de l'élément d'interface utilisateur flottant du premier emplacement d'affichage au second emplacement d'affichage sur le dispositif d'affichage, et éventuellement dans lequel :
le dispositif d'affichage (120) comprend un dispositif d'affichage à écran tactile ;
l'élément d'interface utilisateur flottant (124) est mobile à travers le dispositif d'affichage ; et
les instructions de déplacement indiquant la demande de déplacement de l'élément d'interface utilisateur flottant sont reçues en réponse à un geste tactile reçu sur le dispositif d'affichage à écran tactile de l'élément d'interface utilisateur flottant au premier emplacement d'affichage et un geste de glissement reçu sur le dispositif d'affichage à écran tactile vers le second emplacement d'affichage.

6. Dispositif électronique (100) selon l'une quelconque des revendications 1 à 5, les opérations comprenant également :
la réception des instructions de sélection indiquant une demande pour sélectionner l'élément d'interface utilisateur flottant ; et
en réponse à la réception des instructions de sélection, l'extension de l'élément d'interface utilisateur flottant d'une première taille d'affichage à une seconde taille d'affichage qui est plus grande que la première taille d'affichage.

7. Dispositif électronique (100) selon la revendication 6, dans lequel l'extension de l'élément d'interface utilisateur flottant de la première taille d'affichage à la seconde taille d'affichage comprend l'inclusion d'informations supplémentaires associées à l'événement temporellement variable dans l'élément d'interface utilisateur flottant ayant la seconde taille d'affichage, ou dans lequel l'extension de l'élément d'interface utilisateur flottant d'une première taille d'affichage à une seconde taille d'affichage comprend l'élargissement d'une police de caractères des informations incluses dans l'élément d'interface utilisateur flottant ayant la seconde taille d'affichage.

8. Dispositif électronique (100) selon l'une quelconque des revendications 1 à 7, les opérations comprenant également la réception des instructions indiquant une demande pour afficher des informations associées à de multiples événements temporellement variables, et dans lequel l'élément d'interface utilisateur flottant comprend une ou plusieurs parties d'état indiquant respectivement un état actuel associé à chacun des multiples événements temporellement variables, et/ou les opérations comprenant également :
la réception des instructions indiquant une demande pour afficher des informations associées à de multiples événements temporellement variables ; et
le déclenchement de l'affichage sur le dispositif d'affichage de multiples éléments d'interface utilisateur flottants, dans lequel chaque élément d'interface utilisateur flottant comprend une ou plusieurs parties d'état indiquant respectivement un état actuel associé à un événement temporellement variable correspondant.

9. Dispositif électronique (100) selon l'une quelconque des revendications 1 à 8, dans lequel l'élément d'interface utilisateur flottant (124) est configuré pour rester visible sur le dispositif d'affichage (120) à l'intérieur d'une première partie du dispositif d'affichage et dans lequel une seconde partie du dispositif d'affichage est configurée pour afficher de multiples écrans d'interface utilisateur différents associés à de multiples programmes différents auxquels le dispositif électronique (100) accède, la première partie du dispositif d'affichage et la seconde partie du dispositif d'affichage étant des parties distinctes et non chevauchantes.

10. Procédé mis en œuvre par ordinateur pour afficher de manière dynamique un élément d'interface utilisateur flottant (124) au sein d'interfaces utilisateur graphiques configurées pour être affichées sur un dispositif d'affichage (120) associé à un dispositif électronique (100), le procédé comprenant :
l'identification, par un ou plusieurs processeurs associés au dispositif électronique, un événement temporellement variable se produisant entre un premier instant et un deuxième instant et dans un premier emplacement, le premier emplacement étant différent d'un second emplacement du dispositif électronique ;
la réception, par les un ou plusieurs processeurs, à un troisième instant d'une demande pour afficher des informations relatives à l'événement temporellement variable sur le dispositif d'affichage ;
la détermination, par les un ou plusieurs processeurs, du fait de savoir si le troisième instant se situe entre le premier instant et le deuxième instant ;
en réponse à la demande, lorsque le troisième instant est déterminé comme étant entre le premier instant et le deuxième instant, le déclenchement, par les un ou plusieurs processeurs, de l'affichage d'un élément d'interface utilisateur flottant (124) sur le dispositif d'affichage (120), dans lequel l'élément d'interface utilisateur flottant affiche des informations relatives à l'événement temporellement variable, les informations relatives à l'événement temporellement variable comprenant au moins un état actuel associé à l'événement temporellement variable affiché dans une partie d'état actuel de l'élément d'interface utilisateur flottant, et dans lequel l'élément d'interface utilisateur flottant est configuré pour rester visible sur le dispositif d'affichage sur de multiples écrans d'interface utilisateur différents associés à de multiples programmes différents auxquels le dispositif électronique accède sur la base d'une sélection d'utilisateur dans une application de navigateur de recherche ; et
la mise à jour, par les un ou plusieurs processeurs, de la partie d'état actuel de l'élément d'interface utilisateur flottant lorsque l'au moins un état actuel change par rapport à un état précédent.

11. Procédé mis en oeuvre par ordinateur selon la revendication 10, comprenant également la réception, par les un ou plusieurs processeurs, d'instructions indiquant une demande pour afficher des informations associées à de multiples événements temporellement variables, et dans lequel l'élément d'interface utilisateur flottant comprend une ou plusieurs parties d'état indiquant respectivement un état actuel associé à chacun des multiples événements temporellement variables.

12. Procédé mis en oeuvre par ordinateur selon la revendication 10 ou la revendication 11, les opérations comprenant également :
la réception, par les un ou plusieurs processeurs, des instructions indiquant une demande pour afficher des informations associées à de multiples événements temporellement variables ; et
le déclenchement, par les un ou plusieurs processeurs, de l'affichage sur le dispositif d'affichage de multiples éléments d'interface utilisateur flottants, dans lequel chaque élément d'interface utilisateur flottant comprend une ou plusieurs parties d'état indiquant respectivement un état actuel associé à un événement temporellement variable correspondant, et/ou les opérations comprenant également :
la réception, par les un ou plusieurs processeurs associés au dispositif électronique (100), des instructions de déplacement indiquant une demande pour déplacer l'élément d'interface utilisateur flottant d'un premier emplacement d'affichage à un second emplacement d'affichage sur le dispositif d'affichage ; et
le déplacement, par les un ou plusieurs processeurs associés au dispositif électronique (100) et en réponse à la réception des instructions de déplacement, de l'élément d'interface utilisateur flottant du premier emplacement d'affichage au second emplacement d'affichage sur le dispositif d'affichage, et/ou les opérations comprenant également :
la réception, par les un ou plusieurs processeurs associés au dispositif électronique (100), des instructions de sélection indiquant une demande de sélection de l'élément d'interface utilisateur flottant ; et
l'extension, par les un ou plusieurs processeurs associés au dispositif électronique (100), et en réponse à la réception des instructions de sélection, de l'élément d'interface utilisateur flottant d'une première taille d'affichage à une seconde taille d'affichage qui est supérieure à la première taille d'affichage.

13. Un ou plusieurs supports lisibles par ordinateur non transitoires stockant des instructions exécutables par ordinateur qui, lorsqu'elles sont exécutées par un ou plusieurs processeurs, amènent les un ou plusieurs processeurs à effectuer les opérations, les opérations comprenant :
l'identification d'un événement temporellement variable se produisant entre un premier instant et un deuxième instant et dans un premier emplacement, le premier emplacement étant différent d'un second emplacement du dispositif électronique (100) ;
la réception à un troisième instant d'une demande pour afficher des informations d'affichage relatives à l'événement temporellement variable sur le dispositif d'affichage (120) ;
la détermination du fait de savoir si le troisième instant se situe entre le premier instant et le deuxième instant ;
en réponse à la demande, lorsque le troisième instant est déterminé comme étant entre le premier instant et le deuxième instant, le déclenchement de l'affichage d'un élément d'interface utilisateur flottant (124) sur le dispositif d'affichage, dans lequel l'élément d'interface utilisateur flottant affiche des informations relatives à l'événement temporellement variable, les informations relatives à l'événement temporellement variable comprenant au moins un état actuel associé à l'événement temporellement variable affiché dans une partie d'état actuel de l'élément d'interface utilisateur flottant, et dans lequel l'élément d'interface utilisateur flottant est configuré pour rester visible sur le dispositif d'affichage sur de multiples écrans d'interface utilisateur différents associés à de multiples programmes différents auxquels le dispositif électronique (100) accède sur la base d'une sélection d'utilisateur dans une application de navigateur de recherche ; et
la mise à jour de la partie d'état actuel de l'élément d'interface utilisateur flottant lorsque l'au moins un état actuel change par rapport à un état précédent.

14. Procédé mis en oeuvre par ordinateur selon l'une quelconque des revendications 10 à 12, dans lequel l'événement temporellement variable est une élection.

15. Procédé mis en oeuvre par ordinateur selon l'une quelconque des revendications 10 à 12, dans lequel :
la partie d'état actuel de l'élément d'interface utilisateur flottant inclut des indications d'état de vol, ou dans lequel la partie d'état actuel de l'élément d'interface utilisateur flottant inclut des résultats d'élection.
